# EUROPÄISCHE PATENTSCHRIFT

(11) **EP 3 047 252 B1**
(45) Veröffentlichungstag und Bekanntmachung des Hinweises auf die Patenterteilung: **06.11.2019**
(21) Anmeldenummer: 13766265.6
(22) Anmeldetag: 18.09.2013
(51) Int. Cl.: G01N 3/20, G01N 3/56

(54) **VERFAHREN ZUR ERMITTLUNG DER ABRIEBEIGENSCHAFTEN VON GALVANNEALED STAHLFLACHPRODUKTEN**
METHOD FOR DETERMINATION OF WEAR PROPERTIES OF GALVANNEALED FLAT STEEL PRODUCTS
PROCÉDÉ POUR DÉTERMINATION D'USURE DES PRODUITS PLATS EN ACIER GALVANNEALED

(43) Veröffentlichungstag der Anmeldung: 27.07.2016
(73) Patentinhaber: ThyssenKrupp Steel Europe AG, 47166 Duisburg (DE)
(72) Erfinder: SCHWANKE, Heinz-Günter, 46049 Oberhausen (DE); HUEPER, Thomas, 47441 Moers (DE); URAN, Klaus, 47447 Moers (DE); YANIK, Robert, 33100 Paderborn (DE)
(74) Vertreter: ThyssenKrupp Steel Europe AG
(86) Internationale Anmeldenummer: PCT/EP2013/069408
(87) Internationale Veröffentlichungsnummer: WO 2015/039686

(56) Entgegenhaltungen:
- EP-A1- 2 290 423
- WO-A1-2004/063410
- CA-C- 2 006 756
- CA-C- 2 010 898
- DE-A1-102011 010 315
- DE-U1- 20 010 467
- JP-A- 2000 064 013
- JP-A- 2011 127 216
- KR-A- 20070 003 366
- KR-A- 20120 074 144
- US-A- 4 188 824
- US-A1- 2008 083 477

## Beschreibung

Die Erfindung betrifft ein Verfahren zur Ermittlung der Abriebeigenschaften von galvannealed Stahlflachprodukten.

Eine für viele Anwendungen wesentliche Eigenschaft von galvannealed Stahlflachprodukten, die sowohl verzinkt (galvanized) als auch geglüht (annealed) sind, ist die Abriebfestigkeit der Beschichtung. Unter Stahlflachprodukten werden insbesondere Bänder, Bleche, Zuschnitte oder Platinen verstanden. Des Weiteren können die Stahlflachprodukte warm- oder kaltgewalzt sein. Die Zinkbeschichtung wird insbesondere durch Feuerverzinken oder durch eine elektrolytische Verzinkung bereitgestellt.

Aufgrund der hohen Anforderungen an die Beschichtungen von entsprechenden Flachprodukten besteht zum Zwecke der Qualitätssicherung ein hohes Interesse, die Abriebeigenschaften reproduzierbar und quantifizierbar bestimmen zu können. Ganvannealed beschichtete Stahlbänder kommen beispielsweise in der Automobilindustrie etwa als Außenhautteile, Verstärkungen oder Innenteile zum Einsatz und müssen daher hohe Oberflächenanforderungen erfüllen. Dabei kann das sogenannte Powdering problematisch sein, das eine Art des Abriebs der Zinkbeschichtung beim Umformen beschreibt, bei dem Partikel der Beschichtung ausbrechen. Davon wird typischerweise das Flaking unterschieden, bei dem es sich um ein flächiges Ablösen der Beschichtung handelt.

Die Neigung eines galvannealed Stahlflachprodukts zum Powdering kann mit dem sogenannten Klebestreifenbiegetest abgeschätzt werden. Dabei wird ein Klebestreifen auf eine Werkstückprobe aufgeklebt und diese im Bereich des Klebestreifens stark gebogen, wobei es regelmäßig zu einem Powdering kommt. Die ausgebrochenen Partikel der Beschichtung bleiben an dem Klebestreifen haften, der nach dem Biegen, meist erst nach einen Zurückbiegen in den Ausgangszustand, abgezogen wird. Anschließend wird der Klebestreifen auf einen weißen Untergrund geklebt, so dass sich die Partikel der Beschichtung als grauer Belag abzeichnen. Wenn die Biegung entlang einer Biegelinie erfolgt ist, liegen die ausgebrochenen Partikel in Form einer linienförmigen Abriebspur vor. Der Grad des Powdering wird anhand der Schwärzung der Abriebspur durch die Partikel der Beschichtung oder anhand der Breite der Abriebspur aus Partikeln der Beschichtung bestimmt. Da die Schwärzung in einer Richtung quer zur Biegelinie variiert und zu den Rändern langsam ausläuft, ist die Bestimmung der Schwärzung oder der Breite der Abriebspur in hohem Maße subjektiv.

Des Weiteren sind Verfahren wie der Doppel-Olsen-Test, der Näpfchenziehversuch, der Hutprofiltest oder der Streifenziehversuch bekannt. Diese Verfahren führen jedoch ebenfalls nicht zu zufriedenstellenden Ergebnissen, da diese insgesamt wenig reproduzierbar sind und/oder das prüfbare Festigkeits- und Dickenspektrum begrenzt ist.

Aus WO 2004/063410 A1 ist ein Verfahren zur Ermittlung der Abriebeigenschaften von galvannealed Stahlflachprodukten nach dem Oberbegriff von Anspruch 1 bekannt.

Der vorliegenden Erfindung liegt daher die Aufgabe zugrunde, das Verfahren und die Vorrichtung der eingangs genannten und zuvor näher beschriebenen Art derart auszugestalten und weiterzubilden, dass die Abriebeigenschaften eines galvannealed Flachprodukts objektiver, aussagekräftiger und reproduzierbarer charakterisiert werden können. Bedarfsweise sollen zudem die Prüfmöglichkeiten hinsichtlich der Festigkeit und der Dicke der Probe erweitert werden.

Diese Aufgabe wird gemäß Anspruch 1 durch ein Verfahren zur Ermittlung der Abriebeigenschaften von galvannealed Stahlflachprodukten gelöst.

Es ist also vorgesehen, zunächst auf die galvannealed Stahlflachprodukte einen Klebestreifen aufzukleben, und die Stahlflachprodukte, vorzugsweise quer zu den Klebestreifen, im Bereich des Klebestreifens zu biegen. Das bedeutet, dass das Stahlflachprodukt um eine Achse geboten wird, die längs zum Klebestreifen verläuft. Beispielsweise können die Ränder des Stahlflachprodukts zu beiden Seiten des Klebestreifens aufeinander zu gebogen werden. Auf diese Weise entsteht dann eine Biegelinie bzw. ein V-förmiger Knick des Stahlflachprodukts längs des Klebestreifens. Dort wird aufgrund der mechanischen Belastung der Zinkbeschichtung Abrieb erzeugt und zwar in Form von ausbrechenden Partikeln der Beschichtung, dem sogenannten Powdering. Nach dem Biegen des Stahlflachprodukts kann dieses wieder zurückgebogen bzw. geplättet werden. Dies ist bevorzugt, damit sich die ausgebrochenen Partikel der Beschichtung lösen und zusammen mit dem Klebestreifen von dem Stahlflachprodukt abgezogen werden können. Alternativ kann der Klebestreifen auch erst nach diesem Biegen, vorzugsweise jedoch vor dem Plätten, auf das Stahlflachprodukt aufgeklebt werden, und zwar auf die Biegelinie. Es sollte dann jedoch dafür Sorge getragen werden, dass kein Abrieb verloren geht, also nicht vom Klebestreifen aufgenommen wird, weshalb das nachträgliche Auftragen des Klebestreifens grundsätzlich etwas weniger bevorzugt ist.

Im Falle einer länglichen Biegung des Stahlflachprodukts wird auch der Abrieb vorzugsweise als längliche Abriebspur auf dem Klebestreifen haften. Das Biegen kann beispielsweise dadurch erfolgen, dass ein Biegekeil mit einer länglichen Kante gegen das auf einem Biegegesenk liegende Stahlflachprodukt drückt. Das Stahlflachprodukt wird dadurch um die Kante des Biegekeils herum gebogen. Bevorzugt wird das Biegegesenk durch zwei über einen Spalt voneinander beanstandete und parallel zueinander ausgerichtete Biegerollen gebildet. Anstelle der Biegerollen können auch an den aufeinander zuweisenden Ecken abgerundete Biegeblöcke verwendet werden.

Zur Auswertung des auf dem Klebestreifen haftenden Abriebs wird eine Abmessung des Abriebs auf dem Klebestreifen bestimmt. Hierzu kann der Klebestreifen auf einen kontrastreichen Untergrund, etwa ein weißes Blatt Papier geklebt werden. Wenn das Stahlflachprodukt entlang einer Biegelinie gebogen worden ist, stellt beispielsweise die Breite des Abriebs quer zu dieser Linie eine repräsentative Größe für die Abriebneigung der Zinkbeschichtung dar. Die Längserstreckung des Abriebs auf dem Klebestreifen ist dann dagegen beispielsweise von der Länge des Klebestreifens und/oder der Länge der Kante des Biegekeils abhängig. Grundsätzlich gilt, dass der Abrieb umso stärker ist, je breiter der Abrieb an dem Klebestreifen haftet. Alternativ oder zusätzlich ist der Abrieb umso stärker, je dunkler der Klebestreifen im Bereich des Abriebs ist. Es wird also auch ein repräsentativer Grauwert des Abriebs bestimmt. Dabei kann es sich vorzugsweise um einen mittleren Grauwert handeln. Es kann sich aber beispielsweise auch um einen über einen bestimmten Bereich integrierten Grauwert oder um einen Grauwert an einer bestimmten Stelle des Abriebs auf dem Klebestreifen handeln.

Des Weiteren werden die Eisengehalte der Beschichtungen von bestimmten Stahlflachprodukten ermittelt, um die Abhängigkeit der Abmessungen und der repräsentativen Grauwerte des an den Klebestreifen haftenden Abriebs vom Eisengehalt der Zinkbeschichtung bestimmen zu können. Diese Abhängigkeit kann beispielsweise durch Annähern einer Ausgleichskurve an die Wertepaare in einer Auftragung der Abmessungen oder der repräsentativen Grauwerte gegen die Eisengehalte ermittelt werden. Dabei bietet sich insbesondere eine lineare Annäherung mithin eine Ausgleichsgerade an.

Auf diese Weise kann beispielsweise durch Bestimmung des Bestimmtheitsmaßes die Korrelation der einzelnen Wertepaare mit der Ausgleichskurve bzw. Ausgleichgerade ermittelt werden. Eine gute Korrelation lässt dabei darauf schließen, dass mit dem Verfahren zur Ermittlung der Abriebeigenschaften aussagekräftige Kenngrößen in Form von Abmessungen und repräsentativen Grauwerten erhalten werden können. Die Neigung der Zinkbeschichtung zum Abrieb ist nämlich von dem Eisengehalt abhängig, der in die Zinkbeschichtung hinein diffundiert ist. Dabei steigt die Neigung zum Abrieb bzw. Powdering mit steigendem Eisengehalt, und zwar in vielen Fällen etwa linear. Die Powderingeigenschaften können auch abhängig sein von der Menge des in das Eisensubstrat diffundierenden Zinks, das dort Fe-Zn-Phasen bildet. Sollte die Güte der Korrelation der Abmessung und/oder des repräsentativen Grauwerts abhängig vom Einsengehalt zu gering sein und/oder sollte die Güte der Korrelation der einzelnen Wertepaare aus Abmessung und/oder repräsentativem Grauwert einerseits und Eisengehalt andererseits von der Abhängigkeit, d.h. der funktionalen Beziehung, der Abmessung und/oder des repräsentativen Grauwerts vom Eisengehalt bzw. von der entsprechenden Augleichskurve zu gering sein, kann das Verfahren angepasst werden. Dabei kann eine Ausgleichsgerade als eine Ausgleichskurve angesehen werden. Die Anpassung kann dadurch erfolgen, dass der Schnitt des Biegens modifiziert wird, etwa der Biegewinkel verändert wird. Es kann auch vorgesehen sein, dass die Art der Auswertung des Abriebs zur Bestimmung der repräsentativen Abmessung und/oder des repräsentativen Grauwerts modifiziert wird.

Bei einer ersten bevorzugten Ausgestaltung der Erfindung werden die Stahlflachprodukte jeweils in dem mit dem Klebestreifen versehenen Bereich zum Erzeugen von Abrieb der Zinkbeschichtung in Form einer länglichen Abriebspur gebogen werden. Dies geschieht insbesondere dadurch, dass die Stahlflachprodukte entlang einer Biegelinie gebogen werden, dazu können die Stahlflachprodukte um eine längliche Kante, etwa die eines Biegekeils, gebogen werden. Im Querschnitt betrachtet kann eine V-förmige Biegung des Stahlflachprodukts zur Erzeugung einer länglichen Abriebspur entlang des Klebestreifens erfolgen. Eine solche Abriebspur lässt sich einfach und reproduzierbar zur Bestimmung der Abriebeigenschaften der Zinkbeschichtung auswerten. In diesem Zusammenhang ist es daher besonders bevorzugt, wenn anhand der an den Klebestreifen haftenden Abriebspuren jeweils eine Graubreite als die Breite der Abriebspur ermittelt wird. Die Graubreite stellt bei einer zweckmäßig erzeugten länglichen Abriebspur einen einfach zu bestimmenden und repräsentativen Indikator für die Abriebeigenschaften der Zinkbeschichtung des Stahlflachprodukts dar.

Alternativ oder zusätzlich ist es hinsichtlich der Reproduzierbarkeit bevorzugt, wenn die Abmessungen und/oder die repräsentativen Grauwerte des an den Klebestreifen haftenden Abriebs graphisch, photometrisch und/oder mittels einer Bildverarbeitungseinrichtung bestimmt werden. Die Reproduzierbarkeit kann dabei bedarfsweise weiter gesteigert werden, wenn die entsprechenden Werte automatisch ermittelt werden. Hierzu können beispielsweise lichtempfindliche Sensoren und/oder softwarebasierte Bildverarbeitungseinrichtungen verwendet werden.

Insbesondere bei der softwarebasierten Auswertung mittels einer bedarfsweise an sich bekannten Bildverarbeitungseinrichtung bietet es sich an, wenn die Klebestreifen nicht direkt analysiert werden, was natürlich denkbar wäre, sondern zunächst von den Klebestreifen mittels einer Kamera jeweils wenigstens eine Aufnahme erzeugt wird. Diese Aufnahme kann dann digitalisiert werden, was bedarfsweise bei einer Digitalkamera und/oder einem Scanner automatisch erfolgt. Anhand der auf die beschriebene Weise erzeugten Aufnahmen kann dann die Ermittlung der Abmessungen und repräsentativen Grauwerte des an den Klebestreifen haftenden Abriebs mit hoher Reproduzierbarkeit erfolgen. Auf diese Weise wird nämlich eine subjektive Auswertung mittels des bloßen Auges vermieden. Es kann auch eine Aufnahme oder eine Darstellung des Klebestreifens mittels eines Scanners gescannt werden, wobei das Ergebnis des Scans der Auswertung zugeführt wird.

Um eine fehlerhafte oder unsichere Auswertung zu vermeiden, bietet es sich zudem an, wenn von den Klebestreifen mittels einer Kamera jeweils mehrere Aufnahmen erzeugt werden, die dann jeweils zu einer neuen Darstellung überlagert werden. Diese Überlagerung kann ebenfalls auf an sich bekannte Weise softwarebasiert erzeugt werden. Die mehreren Aufnahmen sollten sich dabei unterscheiden, um bei der Überlagerung einen höheren Kontrast bzw. eine höhere Tiefenschärfe zu erhalten. So werden Aufnahmen bei Auflicht und bei Durchlicht erzeugt. Bei Auflicht erfolgt die Beleuchtung von der gleichen Seite wie die Aufnahme. Bei Durchlicht erfolgt die Beleuchtung von der Kamera aus gesehen von der Rückseite des Klebestreifens. Alternativ oder zusätzlich können Aufnahmen mit unterschiedlicher Belichtung erzeugt werden, wobei wenigstens eine Aufnahme überbelichtet und wenigstens eine Aufnahme unterbelichtet sein kann. Die Ermittlung der Abmessungen und repräsentativen Grauwerte des an den Klebestreifen haftenden Abriebs kann nun anhand der kontrastreicheren bzw. tiefenschärferen jeweils aus den mehreren Aufnahmen erzeugten Darstellungen erfolgen.

Um sicherzustellen, dass stets aussagekräftige Kenngrößen betreffend das Abriebverhalten der galvannealed Stahlfachprodukte erhalten werden, bietet es sich an, wenn die Abhängigkeit unterschiedlicher Abmessungen und/oder unterschiedlicher repräsentativer Grauwerte des an den Klebestreifen haftenden Abriebs vom Eisengehalt der jeweiligen Zinkbeschichtung wiederholt ermittelt werden. Dann kann nämlich in regelmäßigen Abständen wiederholt die Güte der Korrelation der unterschiedlichen Messwerte mit der ermittelten, bedarfsweise funktionalen, Abhängigkeit vom Eisengehalt der Beschichtung bestimmt werden. Wenn sich an die Wertepaare von Abmessungen und/oder repräsentativen Grauwerten mit hoher Übereinstimmung eine Ausgleichskurve oder Ausgleichsgerade annähern lässt, d.h. eine hohe zuvor beschriebene Korrelation vorliegt, sind keine Eingriffe in das Verfahren zur Ermittlung der Abriebeigenschaften erforderlich. Lässt sich jedoch nur eine Ausgleichskurve oder Ausgleichsgerade finden, die nur mäßig oder gar schlecht mit den Messwerten korreliert, also teilweise stark von den Messwerten abweicht, kann ein Eingreifen, beispielsweise durch eine erneute Kalibrierung, erforderlich sein.

Zusätzlich wird auch wiederholt die Güte der Korrelation der unterschiedlichen Abmessungen und der unterschiedlichen repräsentativen Grauwerte des an den Klebestreifen haftenden Abriebs mit der zuvor bestimmten Abhängigkeit der Abmessungen und der repräsentativen Grauwerte des an den Klebestreifen haftenden Abriebs vom Eisengehalt der Zinkbeschichtung bestimmt. Es muss dann also nicht erneut eine entsprechende, bedarfsweise funktionale, Abhängigkeit bestimmt werden, die durch eine Ausgleichskurve oder Ausgleichsgerade repräsentiert sein kann. Es wird vielmehr eine zuvor bestimmte Abhängigkeit mit den neuen Messwerten verglichen. Ergibt dieser Vergleich eine hohe Korrelation zwischen den Messwerten und der zuvor bestimmten Abhängigkeit, führt das Verfahren zu aussagekräftigen Kenngrößen. Ist die Korrelation jedoch mäßig oder gar schlecht, so kann ein Eingreifen erforderlich sein oder bedarfsweise die Abhängigkeit der Kenngröße vom Eisengehalt der Zinkbeschichtung erneut aufgenommen und die Korrelation der Messwerte gegenüber der erneut aufgenommenen Abhängigkeit ermittelt werden. Wird weiter eine nicht zufriedenstellende Korrelation erhalten, sollten die Verfahrens- oder Prozessparameter variiert werden, beispielsweise eine erneute Kalibrierung durchgeführt werden.

Besonders bevorzugt kann es sein, wenn beim Unterschreiten einer Mindestgüte der zuvor beschriebenen Korrelation eine, vorzugsweise automatische, Anpassung oder Kalibrierung zur Verbesserung der Güte der Korrelation durchgeführt wird. Dies führt durch vorheriges Festlegen eines Grenzwertes im Sinne einer Mindestgüte der Korrelation ebenfalls zu einer Objektivierung des Verfahrens.

Damit die Ermittlung der Abriebeigenschaften tatsächlich auf dem durch das Biegen des Stahlflachprodukts erzeugten Abrieb basiert und nicht zu sehr von an der Oberfläche des Stahlflachprodukts anhaftendem Schmutz oder dergleichen beeinträchtigt wird, bietet es sich an, dass die einen Grenzgrauwert unterschreitenden Grauwerte bei der Bestimmung der Abmessungen und der repräsentativen Grauwerte des an den Klebestreifen haftenden Abriebs unberücksichtigt bleiben. Mit anderen Worten werden nur die Bereiche der Klebestreifen berücksichtigt, die hinreichend dunkel sind und somit eindeutig Abrieb aufweisen. Hellere Bereiche der Klebestreifen, deren Grauwerte vorwiegend auf Schmutzpartikel zurückgehen, werden dagegen nicht in die Auswertung der Klebestreifen mit einbezogen.

Die Abmessungen und die repräsentativen Grauwerte des an den Klebestreifen haftenden Abriebs werden für unterschiedliche Graugrenzwerte ermittelt, wobei Grauwerte des Klebestreifens und des Abriebs heller als der jeweilige Grenzgrauwert unberücksichtigt bleiben. Dann können die Abhängigkeiten der Abmessungen und der repräsentativen Grauwerte des an den Klebestreifen haftenden Abriebs vom Eisengehalt der Zinkbeschichtung für jeden Grenzgrauwert separat ermittelt und verglichen werden. Graugrenzwerte, bei denen keine signifikante Abhängigkeit der Abmessungen und/oder der repräsentativen Grauwerte vom Eisengehalt erkennbar ist, sind ungeeignet für das vorliegende Verfahren. Da eine signifikante Abhängigkeit des Powdering vom Eisengehalt existiert, muss der Grenzgrauwert eine solche Abhängigkeit erkennbar werden lassen. Ansonsten sind die mit dem vorliegenden Verfahren ermittelten Kenngrößen nicht oder nicht besonders aussagekräftig hinsichtlich des Abriebverhaltens der Beschichtung. Zudem sollten die für einen Graugrenzwert ermittelten Wertepaare vorzugsweise nicht nur abhängig sein vom Einsengehalt. Die Wertepaare sollten zudem vorzugsweise eine hohe Korrelation mit dieser Abhängigkeit aufweisen.

Ermittelt wird, wie gut die Abmessungen und die repräsentativen Grauwerte des an den Klebestreifen haftenden Abriebs für die jeweiligen Grenzgrauwerte mit den ermittelten Abhängigkeiten korrelieren. Dann wird ein Grenzgrauwert für weitere Ermittlungen der Abmessung und der repräsentativen Grauwerte festgelegt, für den eine gute, vorzugsweise die beste, Korrelation der Abmessungen und der repräsentativen Grauwerte des an den Klebestreifen haftenden Abriebs mit der Abhängigkeit der Abmessungen und der repräsentativen Grauwerte des an den Klebestreifen haftenden Abriebs vom Eisengehalt erhalten werden. Dies kann beispielsweise automatisch erfolgen. In jedem Fall wird auf diese Weise eine weitere Objektivierung bei der Bestimmung der Abriebeigenschaften der Beschichtung erreicht.

Nachfolgend wird die Erfindung anhand einer lediglich ein Ausführungsbeispiel darstellenden Zeichnung näher erläutert. In der Zeichnung zeigt
- Fig. 1: ein Detail einer erfindungsgemäßen Einrichtung zur Ermittlung der Abriebeigenschaften eines galvannealed Stahlflachprodukts,
- Fig. 2: ein galvannealed Stahlflachprodukt mit einem Klebestreifen zur Durchführung des erfindungsgemäßen Verfahrens zur Ermittlung der Abriebeigenschaften in Draufsicht,
- Fig. 3: den Klebestreifen aus Fig. 2 mit einer Abriebspur,
- Fig. 4: eine schematische Darstellung der Einrichtung zur Ermittlung der Abriebeigenschaften eines galvannealed Stahlflachprodukts und
- Fig. 5: eine graphische Darstellung der funktionalen Zusammenhänge zwischen Grauwertbreite und Eisengehalt eines galvannealed Stahlflachprodukts basierend auf unterschiedlichen Grenzgrauwerten.

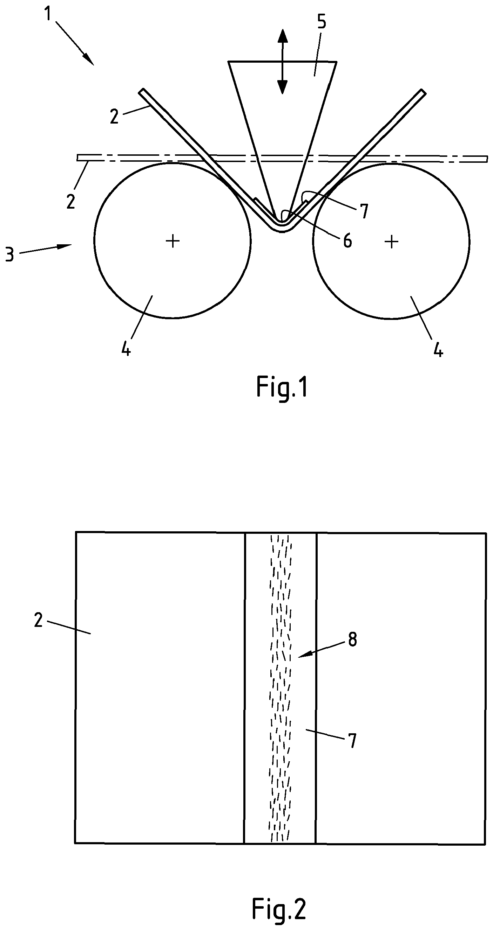

In der Fig. 1 ist ein Detail einer Vorrichtung 1 zum Biegen eines galvannealed Stahlflachprodukts 2 dargestellt. Die Vorrichtung 1 umfasst ein sogenanntes Rollengesenk 3 mit zwei voneinander über einen Spalt beabstandeten Biegerollen 4 und einem Biegekeil 5 mit einem V-förmigen Querschnitt und einer länglichen Kante 6. Auf den Biegerollen 4 wird ein galvannealed Stahlflachprodukt 2 positioniert, auf dessen Oberseite ein Klebestreifen 7 aufgebracht worden ist. Der Biegekeil 5 kann nun in den Spalt zwischen den Biegerollen 4 abgesenkt werden. Dabei drückt der Biegekeil 5 mit seiner Kante 6 in Längsrichtung auf den auf das galvannealed Stahlflachprodukt 2 aufgeklebten Klebestreifen 7, wobei sich das galvannealed Stahlflachprodukt 2 entlang einer durch die Kante 6 des Biegekeils 5 definierten Biegelinie V-förmig nach unten biegt. In der Fig. 1 ist das galvannealed Stahlflachprodukt 2 in der Ausgangsstellung strichliniert und in der gebogenen Stellung mit durchgezogenen Linien dargestellt. Nach erfolgter Biegung des beschichteten galvannealed Stahlflachprodukts 2 wird der Biegekeil 5 wieder angehoben und das galvannealed Stahlflachprodukt 2 durch eine nicht dargestellte Glätteinrichtung wieder zurück gebogen bzw. wieder geglättet.

Das galvannealed Stahlflachprodukt 2 im zurückgebogenen bzw. geglätteten Zustand ist in der Fig. 2 in Draufsicht von oben dargestellt. Man erkennt schematisch dargestellt infolge Powdering beim Biegen ausgebrochene Partikel der Beschichtung entlang der Biegelinie des galvannealed Stahlflachprodukts 2, die sich als Abriebspur 8 abzeichnen. Der Klebestreifen 7 wird zur Auswertung von dem galvannealed Stahlflachprodukt 2 abgezogen, wobei die ausgebrochenen Partikel der Beschichtung als Abrieb an dem Klebestreifen 7 haften bleiben. Von dem Klebestreifen 7 werden anschließend mittels einer Digitalkamera Aufnahmen erzeugt. Dabei wird der Klebestreifen 7 sowohl von der gleichen Seite beleuchtet, von der die Aufnahmen erzeugt werden (Auflicht), als auch von der gegenüberliegenden Seite beleuchtet (Durchlicht). Während jeder der beiden Beleuchtungssituationen werden unterschiedlich belichtete Aufnahmen erzeugt, die teilweise überbelichtet und teilweise unterbelichtet sind. Aus den insgesamt erzeugten Aufnahmen wird anschließend softwarebasiert durch Überlagerung eine Darstellung von dem Klebestreifen 7 mit erhöhtem Kontrast bzw. erhöhter Tiefenschärfe erzeugt.

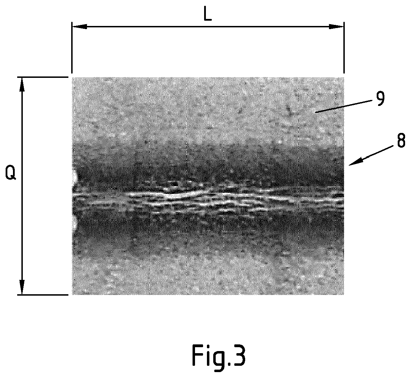

Die in der Fig. 3 wiedergegebene Darstellung 9 des Klebestreifens 7 wird anschließend in einer Bildverarbeitungseinrichtung analysiert. Alternativ könnte der Klebestreifen oder dessen Darstellung auch durch einen Scanner gescannt werden, wobei der Scan dann in der Bildverarbeitungseinrichtung analysiert wirde. Bei der Analyse werden der obere und der untere Bereich des Klebestreifens 7 unberücksichtig gelassen, da diese Bereiche heller sind als der vorgegebene Grenzgrauwert. Nur der mittlere Bereich der Darstellung 9 des Klebestreifens 7, in dem sich die Abriebspur 8 abzeichnet, wird hinsichtlich seiner Breite und hinsichtlich seines mittleren Grauwerts analysiert. Dies erfolgt, indem die Darstellung 9 des Klebestreifens 7 streifenweise gescannt wird, und zwar jeweils in einer Richtung längs zur Darstellung 9 des Klebestreifens 7 und der Abriebspur 8, die parallel zu dem Doppelpfeil L ist. Für jeden Streifen wird ein mittlerer Grauwert ermittelt. Ist dieser mittlere Grauwert heller als der Grenzgrauwert, bleibt der Streifen unberücksichtigt. Die mittleren Grauwerte von Streifen, die größer als der Grenzgrauwert sind, werden erneut gemittelt, um den mittleren Grauwert der Abriebspur 8 in Sinne eines repräsentativen Grauwerts zu erhalten. Zudem wird die Anzahl der Streifen, deren mittlere Grauwerte größer als der Grenzgrauwert sind, mit der Breite der untersuchten Streifen, die vorzugsweise konstant ist, multipliziert. Auf diese Weise wird die Graubreite als die Breite der Abriebspur 8 in einer Richtung gemäß Doppelpfeil Q im Sinne einer repräsentativen Abmessung der Abriebspur 8 erhalten.

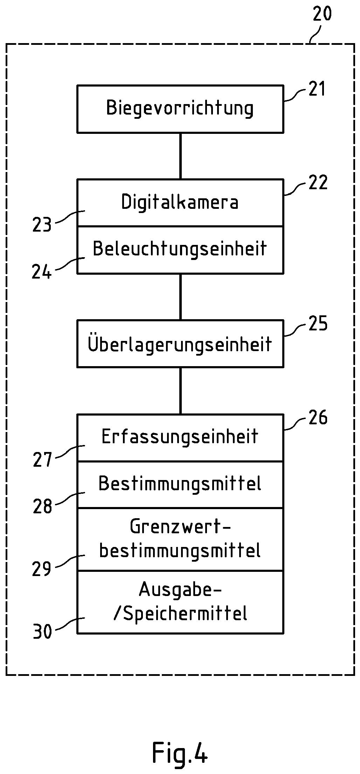

Die Einrichtung 20 zur Durchführung des zuvor beschriebenen Verfahrens zur Ermittlung der Abriebeigenschaften eines beschichteten Flachprodukts 2 ist schematisch in der Fig. 4 dargestellt. Die Einrichtung 20 umfasst eine Biegevorrichtung 21 gemäß Fig. 1 zum Biegen eines beschichteten Flachprodukts 2 und zum anschließenden Glätten, um in reproduzierbarer Weise Abrieb zu erzeugen, der auf einem Klebestreifen 7 haften bleibt. Ferner umfasst die Einrichtung 20 eine Vorrichtung 22 zum Erzeugen einer Darstellung 9 des Klebestreifens 7 umfassend eine Digitalkamera 23 und eine Beleuchtungseinheit 24 zur Beleuchtung des Klebestreifens 7, während die Digitalkamera 23 Aufnahmen vom Klebestreifen 7 erzeugt. Des Weiteren ist eine Überlagerungseinheit 25 zur Überlagerung der Aufnahmen zu einer sehr kontrastreichen Darstellung 9 des Klebestreifens 7 vorgesehen. Diese Darstellung 9 dient als Referenz für die Auswertevorrichtung 26 zur Ermittlung der Abriebeigenschaften eines beschichteten Flachprodukts 2. Die Auswertevorrichtung 26 umfasst eine Erfassungseinheit 27 in Form einer Bildverarbeitungseinrichtung. Diese scannt die Darstellung 9 des Klebestreifens 7 streifenweise ab und bestimmt für jeden Streifen einen mittleren Grauwert und eine Graubreite, wie dies zuvor beschrieben worden ist.

Ein Bestimmungsmittel 28 bestimmt aus den mittleren Grauwerten von Abriebspuren 8 und/oder den Graubreiten von Abriebspuren 8 sowie den Eisengehalten der entsprechenden Abriebspuren 8 eine funktionale Abhängigkeit, und zwar für unterschiedliche Grenzgrauwerte. Zudem wird von einem Grenzgrauwertbestimmungsmittel 29 die Güte der entsprechenden Wertepaare von der ermittelten Abhängigkeit ermittelt. Es wird für weitere Messungen der Grenzgrauwert ausgewählt, für den sich einerseits eine signifikante Abhängigkeit der Messwerte vom Eisengehalt ergibt und für den sich andererseits die beste Korrelation der Messwerte bezogen auf die zuvor beschriebenen funktionalen Abhängigkeiten ergibt. Im Übrigen ist noch ein Ausgabe- und Speichermittel 30 zur Ausgabe und Speicherung des ermittelten Grenzgrauwerts für nachfolgende Bestimmungen des mittleren Grauwerts und/oder der Graubreite vorgesehen.

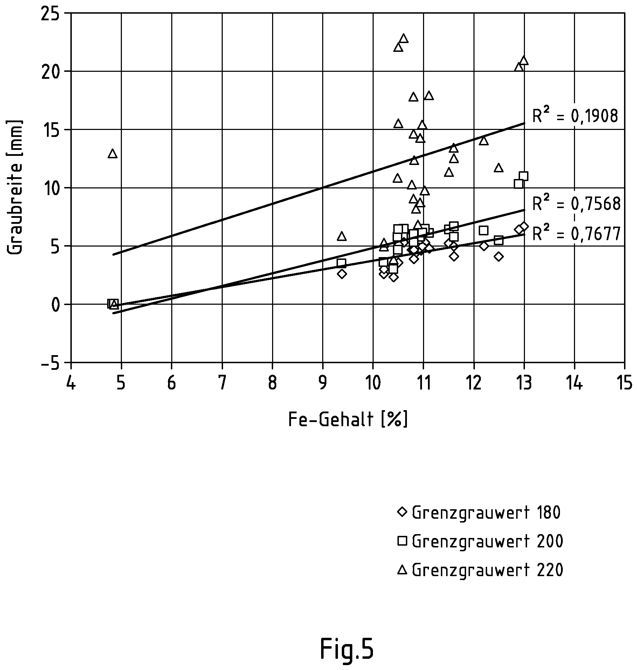

In der Fig. 5 ist ein Diagramm dargestellt, auf dem auf der Abszisse der Eisengehalt der Beschichtung und auf der Ordinate die Graubreite abgetragen ist. Eingetragen in das Diagramm sind Graubreiten, die abhängig von dem Eisengehalt für bestimmte Grenzgrauwerte (180, 200 und 220) ermittelt wurden. An die Messwerte für jeden Grenzgrauwert ist eine Gerade angenähert worden, wobei jeweils die Güte der Korrelation (R² = Bestimmtheitsmaß) der Ausgleichsgeraden mit den Messwerten angeben ist. Es ergibt sich in diesem Fall, dass die Korrelation für einen Grenzgrauwert von 180 am höchsten ist (R²=0,7677). Daher kann der Grenzgrauwert von 180 der späteren Auswertung von Flachprodukten desselben Typs herangezogen werden, um möglichst reproduzierbare Ergebnisse zu erhalten. Da der Abrieb mit dem Eisengehalt korreliert, führen Grenzgrauwerte, die diese Korrelation besonders gut wiedergeben, zu besonders aussagekräftigen und reproduzierbaren Ergebnissen.

Die Grauwerte können beim dargestellten und insoweit bevorzugten Verfahren Werte zwischen 0 für völlig schwarz und 255 für Reinweiß annehmen. Die Graubreite wird dagegen in Millimetern ermittelt.

## Patentansprüche

1. Verfahren zur Ermittlung der Abriebeigenschaften von galvannealed Stahlflachprodukten (2), bei dem auf die Stahlflachprodukte (2) jeweils ein Klebestreifen (7) aufgeklebt wird, bei dem die Stahlflachprodukte (2) jeweils in dem mit dem Klebestreifen (7) versehenen Bereich zur Erzeugung von Abrieb der Zinkbeschichtung gebogen werden, bei dem die Klebestreifen (7) nach dem Biegen der Stahlflachprodukte (2) zusammen mit an den Klebestreifen (7) haftendem Abrieb der Zinkbeschichtung abgezogen werden, und bei dem wenigstens teilweise die Eisengehalte der Zinkbeschichtungen der jeweiligen Stahlflachprodukte ermittelt werden, **dadurch gekennzeichnet, dass** jeweils eine Abmessung und ein repräsentativer Grauwert des an den Klebestreifen (7) haftenden Abriebs ermittelt wird, die Abhängigkeit der Abmessungen und der repräsentativen Grauwerte des an den Klebestreifen (7) haftenden Abriebs vom Eisengehalt der Zinkbeschichtung ermittelt wird, von den Klebestreifen (7) mittels einer Kamera (23) jeweils mehrere Aufnahmen sowohl bei Auflicht als auch bei Durchlicht und mit unterschiedlichen Belichtungen erzeugt werden, wobei jeweils die mehreren Aufnahmen zu einer neuen Darstellung überlagert werden und wobei die Ermittlung der Abmessungen und repräsentativen Grauwerte des an den Klebestreifen (7) haftenden Abriebs anhand der Darstellungen (9) erfolgt und wobei die Abmessungen und die repräsentativen Grauwerte des an den Klebestreifen (7) haftenden Abriebs für unterschiedliche Graugrenzwerte ermittelt werden, wobei Grauwerte des Klebestreifens (7) und des Abriebs heller als der jeweilige Grenzgrauwert unberücksichtigt bleiben und wobei die Abhängigkeiten der Abmessungen und der repräsentativen Grauwerte des an den Klebestreifen (7) haftenden Abriebs vom Eisengehalt der Zinkbeschichtung für jeden Grenzgrauwert ermittelt werden und wobei ermittelt wird, wie gut die Abmessungen und die repräsentativen Grauwerte des an den Klebestreifen (7) haftenden Abriebs für die jeweiligen Grenzgrauwerte mit den ermittelten Abhängigkeiten korrelieren und wobei ein Grenzgrauwert für weitere Ermittlungen der Abmessung und der repräsentativen Grauwerte festgelegt wird, für den eine gute Korrelation der Abmessungen und der repräsentativen Grauwerte des an den Klebestreifen (7) haftenden Abriebs mit der Abhängigkeit der Abmessungen und der repräsentativen Grauwerte des an den Klebestreifen (7) haftenden Abriebs vom Eisengehalt erhalten wird.

2. Verfahren nach Anspruch 1,
bei dem die Stahlflachprodukte (2) jeweils in dem mit dem Klebestreifen (7) versehenen Bereich zur Erzeugen von Abrieb der Zinkbeschichtung in Form einer länglichen Abriebspur (8) gebogen werden und, vorzugsweise, bei dem jeweils eine Graubreite als Breite der Abriebspur (8) des an den Klebestreifen (7) haftenden Abriebs ermittelt wird.

3. Verfahren nach Anspruch 1 oder 2,
bei dem die Abmessungen und die repräsentativen Grauwerte des an den Klebestreifen (7) haftenden Abriebs graphisch, photometrisch und/oder mittels einer Bildverarbeitungseinrichtung bestimmt werden.

4. Verfahren nach einem der Ansprüche 1 bis 3,
bei dem von den Klebestreifen (7) mittels einer Bildaufnahmeeinrichtung, insbesondere in Form einer Kamera (23) und/oder in Form eines Scanners, jeweils wenigstens eine Aufnahme erzeugt wird und bei dem die Ermittlung der Abmessungen und repräsentativen Grauwerte des an den Klebestreifen (7) haftenden Abriebs anhand der Aufnahmen erfolgt.

5. Verfahren nach einem der Ansprüche 1 bis 4,
bei dem wiederholt die Abhängigkeit unterschiedlicher Abmessungen und unterschiedlicher repräsentativer Grauwerte des an den Klebestreifen (7) haftenden Abriebs vom Eisengehalt der jeweiligen Zinkbeschichtung ermittelt werden und bei dem wiederholt die Güte der Korrelation der unterschiedlichen Messwerte mit der ermittelten Abhängigkeit bestimmt wird.

6. Verfahren nach einem der Ansprüche 1 bis 5,
bei dem wiederholt die Güte der Korrelation der unterschiedlichen Abmessungen und der unterschiedlichen repräsentativen Grauwerte des an den Klebestreifen (7) haftenden Abriebs mit der zuvor bestimmten Abhängigkeit der Abmessungen und der repräsentativen Grauwerte des an den Klebestreifen (7) haftenden Abriebs vom Eisengehalt der Zinkbeschichtung bestimmt wird.

7. Verfahren nach Anspruch 5 oder 6,
bei dem beim Unterschreiten einer Mindestgüte der Korrelation eine, vorzugsweise automatische, Anpassung oder Kalibrierung zur Verbesserung der Güte der Korrelation durchgeführt wird.

8. Verfahren nach einem der Ansprüche 1 bis 7,
bei dem ermittelt wird, wie gut die Abmessungen und die repräsentativen Grauwerte des an den Klebestreifen (7) haftenden Abriebs für die jeweiligen Grenzgrauwerte mit den ermittelten Abhängigkeiten korrelieren, und bei dem ein Grenzgrauwert für weitere Ermittlungen der Abmessung und der repräsentativen Grauwerte festgelegt wird, für die beste Korrelation der Abmessungen und der repräsentativen Grauwerte des an den Klebestreifen (7) haftenden Abriebs mit der Abhängigkeit der Abmessungen und der repräsentativen Grauwerte des an den Klebestreifen (7) haftenden Abriebs erhalten wird.

## Claims

1. Method for determining the abrasion characteristics of galvannealed flat steel products (2), in which an adhesive strip (7) is respectively stuck onto the flat steel products (2), in which the flat steel products (2) are respectively bent in the region provided with the adhesive strip (7), in order to produce abrasion of the zinc coating, in which, following the bending of the flat steel products (2), the adhesive strip (7) is pulled off together with dust of the zinc coating adhering to the adhesive strip (7), and in which, at least to some extent, the iron contents of the zinc coatings of the respective flat steel products are determined, **characterized in that** in each case a dimension and a representative gray value of the dust adhering to the adhesive strip (7) is determined, the dependence of the dimensions and the representative gray values of the dust adhering to the adhesive strip (7) on the iron content of the zinc coating is determined, a plurality of photographs of the adhesive strip (7) are respectively produced by means of a camera (23) both under incident light and also with transmitted light and with different illuminations, wherein in each case the plurality of photographs are superimposed to form a new illustration and wherein the determination of the dimensions and representative gray values of the dust adhering to the adhesive strip (7) is carried out by using the illustrations (9) and wherein the dimensions and the representative gray values of the dust adhering to the adhesive strip (7) are determined for different limiting gray values, wherein gray values of the adhesive strip (7) and of the dust that are lighter than the respective limiting gray value remain unconsidered and wherein the dependencies of the dimensions and the representative gray values of the dust adhering to the adhesive strip (7) on the iron content of the zinc coating are determined for each limiting gray value and wherein it is determined how well the dimensions and the representative gray values of the dust adhering to the adhesive strip (7) for the respective limiting gray values correlate with the determined dependencies and wherein a limiting gray value is defined for further determinations of the dimension and the representative gray values for which a good correlation of the dimensions and the representative gray values of the dust adhering to the adhesive strip (7) with the dependence of the dimensions and the representative gray values of the dust adhering to the adhesive strip (7) on the iron content is obtained.

2. Method according to Claim 1, in which the flat steel products (2) are each bent in the region provided with the adhesive strip (7) to produce abrasion of the zinc coating in the form of an elongated dust track (8) and, preferably, in which a gray width is respectively determined as the width of the dust track (8) of the dust adhering to the adhesive strip (7).

3. Method according to Claim 1 or 2, in which the dimensions and the representative gray values of the dust adhering to the adhesive strip (7) are determined graphically, photometrically and/or by means of an image processing apparatus.

4. Method according to one of Claims 1 to 3, in which at least one photograph of the adhesive strip (7) is respectively produced by means of an imaging apparatus, in particular in the form of a camera (23) and/or in the form of a scanner, and in which the determination of the dimensions and representative gray values of the dust adhering to the adhesive strip (7) is carried out by using the photographs.

5. Method according to one of Claims 1 to 4, in which the dependence of different dimensions and different representative gray values of the dust adhering to the adhesive strip (7) on the iron content of the respective zinc coating is determined repeatedly, and in which the quality of the correlation of the different measured values with the determined dependence is determined repeatedly.

6. Method according to one of Claims 1 to 5, in which the quality of the correlation of the different dimensions and the different representative gray values of the dust adhering to the adhesive strip (7) with the previously determined dependence of the dimensions and the representative gray values of the dust adhering to the adhesive strip (7) on the iron content of the zinc coating is determined repeatedly.

7. Method according to Claim 5 or 6, in which, if the correlation falls below a minimum quality, a preferably automatic adaptation or calibration is carried out in order to improve the quality of the correlation.

8. Method according to one of Claims 1 to 7, in which it is determined how well the dimensions and the representative gray values of the dust adhering to the adhesive strip (7) for the respective limiting gray values correlate with the determined dependencies, and in which a limiting gray value is defined for further determinations of the dimension and the representative gray values for which the best correlation of the dimensions and the representative gray values of the dust adhering to the adhesive strip (7) with the dependence of the dimensions and the representative gray values of the dust adhering to the adhesive strip (7) is obtained.

## Revendications

1. Procédé pour la détermination des propriétés d'usure de produits plats en acier galvannealed (2), dans lequel on colle respectivement une bande adhésive (7) sur les produits plats en acier (2), dans lequel on plie les produits plats en acier (2) respectivement dans la région munie de la bande adhésive (7) pour produire une usure du revêtement de zinc, dans lequel on retire la bande adhésive (7) après le pliage des produits plats en acier (2) en même temps que les fragments d'usure du revêtement de zinc qui adhèrent à la bande adhésive (7), et dans lequel on détermine au moins en partie la teneur en fer du revêtement de zinc des produits plats en acier respectifs, **caractérisé en ce que** l'on détermine chaque fois une dimension et une valeur de gris représentative des fragments d'usure qui adhèrent à la bande adhésive (7), on détermine la relation de dépendance entre les dimensions et les valeurs de gris représentatives des fragments d'usure qui adhèrent à la bande adhésive (7) et la teneur en fer du revêtement de zinc, on réalise chaque fois plusieurs prises de vue de la bande adhésive (7) au moyen d'une caméra (23) aussi bien en lumière incidente qu'en lumière transmise et avec différentes expositions, dans lequel on superpose les multiples prises de vue pour une nouvelle représentation et on effectue la détermination des dimensions et des valeurs de gris représentatives des fragments d'usure qui adhèrent à la bande adhésive (7) à l'aide des représentations (9) et dans lequel on détermine les dimensions et les valeurs de gris représentatives des fragments d'usure qui adhèrent à la bande adhésive (7) pour différentes valeurs de gris limites, dans lequel on ne tient pas compte des valeurs de gris de la bande adhésive (7) et des fragments d'usure plus clairs que la valeur de gris limite respective et dans lequel on détermine les relations de dépendance entre les dimensions et les valeurs de gris représentatives des fragments d'usure qui adhèrent à la bande adhésive (7) et la teneur en fer du revêtement de zinc pour chaque valeur de gris limite, et dans lequel on détermine dans quelle mesure les dimensions et les valeurs de gris représentatives des fragments d'usure qui adhèrent à la bande adhésive (7) pour les valeurs de gris limites respectives se corrèlent avec les relations de dépendance déterminées et dans lequel on fixe une valeur de gris limite pour d'autres déterminations des dimensions et des valeurs de gris représentatives, pour laquelle on obtient une bonne corrélation des dimensions et des valeurs de gris représentatives des fragments d'usure qui adhèrent à la bande adhésive (7) avec la relation de dépendance entre les dimensions et les valeurs de gris représentatives des fragments d'usure qui adhèrent à la bande adhésive (7) et la teneur en fer.

2. Procédé selon la revendication 1, dans lequel on plie les produits plats en acier (2) respectivement dans la région munie de la bande adhésive (7) pour produire une usure du revêtement de zinc sous la forme d'une trace d'usure allongée (8), et de préférence dans lequel on détermine respectivement une largeur de gris comme largeur de la trace d'usure (8) des fragments d'usure qui adhèrent à la bande adhésive (7).

3. Procédé selon une revendication 1 ou 2, dans lequel on détermine les dimensions et les valeurs de gris représentatives des fragments d'usure qui adhèrent à la bande adhésive (7) graphiquement, par photométrie et/ou au moyen d'un dispositif de traitement d'image.

4. Procédé selon l'une quelconque des revendications 1 à 3, dans lequel on réalise chaque fois au moins une prise de vue de la bande adhésive (7) au moyen d'un dispositif de prise de vue, en particulier sous la forme d'une caméra (23) et/ou sous la forme d'un scanneur, et dans lequel on effectue la détermination des dimensions et des valeurs de gris représentatives des fragments d'usure qui adhèrent à la bande adhésive (7) à l'aide des prises de vue.

5. Procédé selon l'une quelconque des revendications 1 à 4, dans lequel on détermine de façon répétée la relation de dépendance entre différentes dimensions et différentes valeurs de gris représentatives des fragments d'usure qui adhèrent à la bande adhésive (7) et la teneur en fer du revêtement de zinc respectif, et dans lequel on détermine de façon répétée la qualité de la corrélation entre les différentes valeurs de mesure et la relation de dépendance déterminée.

6. Procédé selon l'une quelconque des revendications 1 à 5, dans lequel on détermine de façon répétée la qualité de la corrélation entre les différentes dimensions et les différentes valeurs de gris représentatives des fragments d'usure qui adhèrent à la bande adhésive (7) avec la relation de dépendance déterminée au préalable entre les dimensions et les valeurs de gris représentatives des fragments d'usure qui adhèrent à la bande adhésive (7) et la teneur en fer du revêtement de zinc.

7. Procédé selon une revendication 5 ou 6, dans lequel, lorsque la corrélation descend en dessous d'une qualité minimum, on opère une adaptation ou un calibrage, de préférence automatique, pour l'amélioration de la qualité de la corrélation.

8. Procédé selon l'une quelconque des revendications 1 à 7, dans lequel on détermine dans quelle mesure les dimensions et les valeurs de gris représentatives des fragments d'usure qui adhèrent à la bande adhésive (7) pour les valeurs de gris limites respectives se corrèlent avec les relations de dépendance déterminées, et dans lequel on fixe une valeur de gris limite pour d'autres déterminations des dimensions et des valeurs de gris représentatives, pour laquelle on obtient la meilleure corrélation des dimensions et des valeurs de gris représentatives des fragments d'usure qui adhèrent à la bande adhésive (7) avec la relation de dépendance entre les dimensions et les valeurs de gris représentatives des fragments d'usure qui adhèrent à la bande adhésive (7).
